# EUROPÄISCHE PATENTSCHRIFT

(11) **EP 2 191 712 B1**
(45) Veröffentlichungstag und Bekanntmachung des Hinweises auf die Patenterteilung: **07.09.2011**
(21) Anmeldenummer: 09013731.6
(22) Anmeldetag: 31.10.2009
(51) Int. Cl.: A01D 90/10

(54) **Silagewagen**
Silage car
Wagon d'ensilage

(30) Priorität: 01.12.2008 DE 102008059761
(43) Veröffentlichungstag der Anmeldung: 02.06.2010
(73) Patentinhaber: HAWE-Wester GmbH & Co. KG, 26892 Wippingen (DE)
(72) Erfinder: Wester, Heinrich, 26892 Wippingen (DE); Gerdes, Bernhard, 26892 Wippingen (DE)
(74) Vertreter: Heiland, Karsten

(56) Entgegenhaltungen:
- EP-A- 0 704 156
- EP-A- 0 793 911
- US-A- 6 155 506

## Beschreibung

Die Erfindung betrifft einen Silagewagen gemäß dem Oberbegriff des Anspruchs 1. Unter den Begriff Silage fallen insbesondere Grassilage, Maissilage und Ganzpflanzsilage (GPS) sowie allgemein nachwachsende Rohstoffe, die in gehäckselter Form vorliegen. Dabei wird von einem Trockensubstanzanteil von vorzugsweise 30 bis 40 % ausgegangen.

Für den Betrieb großer Biogasanlagen werden erhebliche Mengen an nachwachsenden Rohstoffen wie zum Beispiel Mais- oder Grassilage benötigt. Eine 500 kW-Anlage benötigt etwa 180 ha Maissilage. Pro ha werden etwa 90 m³ Mais geerntet. Die benötigten 16.000 m³ Maisilage müssen nach dem Ernten und Häckseln vom Feld abtransportiert und gelagert werden. Im Laufe des Jahres müssen dann täglich etwa 44 m³ Mais vom Lagerort in eine Feststoffdosieranlage gefüllt werden, welche kontinuierlich die Biomasse in die Biogasanlage eindosiert.

Zum Befüllen der Feststoffdosieranlage werden bei hoch aufgebauten Biogasanlagen meistens Teleskoplader verwendet. Gerade bei größeren Biogasanlagen ist das Befüllen mit Teleskopladern sehr zeitaufwendig, da sehr viele Fahrten mit dem Lader nötig sind. Ein anderes Problem ist die große Menge an Maissilage, die vom Feld zum Lagerort geholt werden muss. Die Kosten der Fahrten mit einem Ackerschlepper sind so hoch, dass nach Möglichkeiten gesucht wird, die Maissilage direkt ab Feld mit einem LKW zu transportieren. Diese können aber wegen der Bodenverhältnisse die Ackerflächen nicht befahren.

Bekannt sind Silagewagen, die als Anhänger von einem Ackerschlepper gezogen werden und dabei die geerntete und gehäckselte Silage auf dem Feld aufnehmen. Die Silage wird anschließend an einem Lagerort über eine Heckklappe aus dem Silagewagen entladen.

Einen schleppbaren Wagen für die Ausgabe von Silage zeigt die EP 0 704 156 A1. Der Auswurf erfolgt mit Hilfe von zwei gegenläufig drehenden Turbinenrädern und einem Auswurfturm. Innerhalb des Laderaums ist ein Förderband vorgeordnet.

Aufgabe der vorliegenden Erfindung ist die Schaffung eines Silagewagens mit der Möglichkeit des Umladens oder Überladens der Silage zur Weiterverarbeitung oder auf ein anderes Fahrzeug. Das Umladen soll möglichst schnell und zielgerichtet durchführbar sein. Insbesondere soll eine definierte Geschwindigkeit der Silage mit einer für die Weiterförderung im Auswurfrotorgebläse günstigen Richtung erreichbar sein.

Der erfindungsgemäße Silagewagen weist folgende Merkmale auf:
a) einen Laderaum zur Aufnahme von Silage,
b) ein Auswurfrotorgebläse mit Auswurfturm,
c) einen Laderaumförderer zur Förderung der Silage innerhalb des Laderaums in Richtung auf das Auswurfrotorgebläse,
d) dem Auswurfrotorgebläse ist ein Vorbeschleunigungsgebläse vorgeordnet.

Der Silagewagen ist als Anhänger für einen Schlepper ausgebildet. Die Silage kann mit dem Silagewagen leicht und schnell umgeladen werden auf einen LKW oder in ein stationäres Lager. Der Auswurfturm ist drehbar und anhebbar, so dass eine genaue Zielrichtung eingestellt werden kann. Das Auswurfrotorgebläse weist vorteilhafterweise eine horizontale und in Fahrzeuglängsrichtung verlaufende Drehachse auf. Auswurfrotorgebläse werden auch als Auswurfräder bezeichnet und sind aus anderen Anwendungen bekannt, etwa bei Schneefräsen. Ein schnelldrehender Rotor schleudert das zu fördernde Gut in den tangential angeordneten Auswurfturm. Dieser leitet das zu fördernde Gut in eine gewünschte Richtung.

Nach der Erfindung ist dem Auswurfrotorgebläse ein Vorbeschleunigungsrotor vorgeordnet. Letzterer führt dem Auswurfrotorgebläse eine definierte Menge Silage zu und bringt diese dabei auf eine definierte Geschwindigkeit mit einer für die Weiterförderung im Auswurfrotorgebläse günstigen Richtung. Vorteilhafterweise ist zwischen Vorbeschleunigungsrotor und Auswurfrotorgebläse ein freier Querschnitt für die Übergabe der Silage vorgesehen, wobei der freie Querschnitt kleiner ist als ein Viertel der vom Rotor des Auswurfrotorgebläses überstrichenen Fläche. Insbesondere beträgt der freie Querschnitt ein Zehntel bis ein Viertel der vom Rotor des Auswurfrotorgebläses überstrichenen Fläche.

Nach einem weiteren Gedanken der Erfindung weist das Vorbeschleunigungsgebläse einen Eingangsquerschnitt für den Eintritt der Silage auf, welcher etwa der vom Rotor des Vorbeschleunigungsgebläses überstrichenen Fläche entspricht. Vorzugsweise entspricht der Eingangsquerschnitt etwa der halben bis ganzen überstrichenen Fläche.

Nach einem weiteren Gedanken der Erfindung rotiert das Vorbeschleunigungsgebläse mit aufrechter Drehachse. Dabei liegt eine Rotationsebene des Vorbeschleunigungsgebläses unterhalb einer horizontalen, durch die Drehachse des Auswurfradgebläses gebildeten Ebene, insbesondere unterhalb der Drehachse des Auswurfradgebläses aber seitlich versetzt zu dieser.

Nach einem weiteren Gedanken der Erfindung tritt das zu fördernde Gut vom Vorbeschleunigungsgebläse in das Auswurfradgebläse unter einem Winkel von 20° bis 50°, insbesondere 25° bis 45° ein, wobei der Winkel an einer Rotationsebene des Auswurfradgebläses anliegt, und wobei das zu fördernde Gut beim Eintritt in das Auswurfradgebläse eine Geschwindigkeitskomponente in Drehrechtung des Auswurfradgebläses aufweist. Das zu fördernde Gut tritt tangential aus dem Vorbeschleunigungsgebläse aus und wird in die Drehung des Auswurfsradgebläses hinein gegeben aber mit einem Winkel zur Rotationsebene des Auswurfradgebläses.

Erfindungsgemäß kann das Vorbeschleunigungsgebläse Rotorblätter aufweisen, die zur Rotationsebene um etwa 30° bis 60° geneigt sind. Das von oben in das Vorbeschleunigungsgebläse gelangende zu fördernde Gut wird nach unten angesaugt und tangential ausgeworfen in die Drehung des Auswurfradgebläses hinein.

Nach einem weiteren Gedanken der Erfindung weist das Auswurfradgebläse Rotorschaufeln auf, die zur Rotationsebene des Auswurfradgebläses etwa 90° geneigt sind, und/oder die relativ zur jeweiligen Radialrichtung gegen die Drehrichtung geneigt sind um 10° bis 20°. Die Neigung gegen die Radialrichtung verbessert die Auswurfleistung für die zu fördernde Silage, ohne dass übermäßiger Verschleiß an Gebläsewandungen auftritt.

Nach einem weiteren Gedanken der Erfindung können Zerkleinerungswalzen im Anschluss an den Laderaumförderer oder am Ende desselben vorgesehen sein. Vorzugsweise sind mehrere Zerkleinerungswalzen übereinander angeordnet, mit quer zur Fahrzeuglängsrichtung und horizontal ausgerichteten Drehachsen. Insbesondere liegen die Drehachsen mehrerer Zerkleinerungswalzen in einer gemeinsamen Ebene, welche gegenüber einer senkrechten Ebene leicht geneigt ist, etwa um 20°. Die Zerkleinerungswalzen sind vorzugsweise oberhalb einer Förderebene des Laderaumförderers angeordnet.

Erfindungsgemäß kann zwischen dem Auswurfradgebläse und dem Laderaumförderer eine Querfördereinrichtung vorgesehen sein, insbesondere unterhalb einer Laderaumbodenebene. Mit der Querfördereinrichtung wird die Silage in Querrichtung zusammengeführt zu einem gemeinsamen Übergabepunkt. Der Querfördereinrichtung wird die Silage durch den Laderaumförderer in Längsrichtung des Wagen zugeführt. Die Silage fällt dann vom Laderaumboden in die Querfördereinrichtung und wird dort zusammengeschoben.

Vorteilhafterweise fördert die Querfördereinrichtung die Silage von außen nach innen, also nicht zu einer Außenseite des Silagewagens. Insbesondere wird die Silage zu einem Übergabebereich gefördert, der einen Versatz zur Mitte bzw. einen Abstand zu einer Wagenlängsmittelachse aufweist.

Nach einem weiteren Gedanken der Erfindung weist die Querfördereinrichtung mindestens eine Schnecke auf, wobei auf einem freien Abschnitt einer Schneckenwelle keine Schneckenwendel vorgesehen ist und wobei auf hierzu benachbarten Abschnitten der Schneckenwelle Schneckenwendel angeordnet sind, mit denen die Silage in Richtung auf den freien Abschnitt förderbar ist. Der freie Abschnitt ist vorzugsweise außermittig auf der Schneckenwelle vorgesehen, also mit einem Versatz zur halben Länge der Schneckenwelle. Insbesondere sind zwei Schneckenwellen vorgesehen, so dass ein hoher Massendurchsatz erreichbar ist.

Nach einem weiteren Gedanken der Erfindung ist das Vorbeschleunigungsgebläse unterhalb einer Laderaumbodenebene angeordnet, insbesondere unterhalb einer dem Laderaumförderer nachgeordneten Querfördereinrichtung. Damit ist das Vorbeschleunigungsgebläse von allen dem Auswurfradgebläse vorgeordneten Förderern am tiefsten angeordnet.

Erfindungsgemäß kann der Laderaumförderer nach Art einen Kratzbodenförderers ausgebildet sein. Derartige Förderer sind bekannt und müssen nicht näher erläutert werden.

Vorteilhafterweise beinhaltet der Laderaumförderer mehrere, parallel nebeneinander angeordnete Förderer. Dies erhöht die Ausfallsicherheit. Auch kann die Zufuhr der Silage in Richtung auf das Auswurfradgebläse im Silagewagen rechtsseitig und linksseitig unabhängig voneinander gesteuert werden.

Nach einem weiteren Gedanken der Erfindung ist das Auswurfrotorgebläse an einer Vorderseite des Silagewagens angeordnet. Dabei fördert der Laderaumförderer die Silage in Richtung auf die Vorderseite des Silagewagens. Bei dieser Anordnung ist das Auswurfrotorgebläse mit dem Auswurfturm vom Schlepper aus gut sichtbar und dadurch auch leichter bedienbar.

Erfindungsgemäß können die Zerkleinerungswalzen Schneckenwendel aufweisen, wobei die Schneckenwendel zur Förderung der Silage von außen nach innen ausgebildet sein können. Die Zerkleinerungswalzen haben damit eine Doppelfunktion, nämlich zum einen soll die zugeförderte Silage auseinander gerissen werden und zum anderen erfolgt eine Förderung in Querrichtung, möglichst in einen Bereich oberhalb des Vorbeschleunigungsgebläses und/oder des Auswurfradgebläses.

Nach einem weiteren Gedanken der Erfindung ist das Auswurfrotorgebläse direkt von einer Zapfwelle eines Schleppers antreibbar. Die Welle des Auswurfrotorgebläses ist mit einer Gelenkwelle zum Anschluss an die Zapfwelle des Schleppers versehen, ohne dass ein Getriebe dazwischen geschaltet ist.

Vorteilhafterweise ist der Ladraumförderer hydraulisch angetrieben. Herkömmliche Schlepper weisen ohnehin ein Hydrauliksystem zum Anschluss von Aggregaten auf. In diesem Fall ist der Laderaumförderer an die Hydraulik angeschlossen bzw. hydraulisch antreibbar.

Nach einem weiteren Gedanken der Erfindung ist das Vorbeschleunigungsgebläse getrieblich mit dem Antrieb für das Auswurfrotorgebläse gekoppelt. Die Kopplung ist mechanischer Art, nicht hydraulisch. Konkret kann dem Vorbeschleunigungsgebläse ein Winkelgetriebe vorgeordnet sein, welches über eine Kette oder ein anderes Zugmittel von der Welle des Auswurfrotorgebläses angetrieben wird.

Nach einem weiteren Gedanken der Erfindung sind Zerkleinerungswalzen und/oder eine Querfördereinrichtung mittelbar über eine Zapfwelle eines Schleppers antreibbar und dabei insbesondere getrieblich mit der Welle des Auswurfrotorgebläses verbunden.

Erfindungsgemäß kann in einer getrieblichen Verbindung zwischen Zapfwelle oder Welle des Auswurfrotorgebläses einerseits und Zerkleinerungswalzen und/oder Querfördereinrichtung andererseits eine steuerbare Kupplung vorgesehen sein. Die Kupplung ist zuschaltbar, insbesondere sobald Auswurfrotorgebläse und Vorbeschleunigungsgebläse mit einer gewissen Mindestdrehzahl laufen. Im Fehlerfall - etwa bei nachlassender Drehzahl - trennt die Kupplung den Antrieb ab. Von den Zerkleinerungswalzen und/oder der Querfördereinrichtung wird dann keine Silage mehr zugefördert. Das Auswurfrotorgebläse kann sich nicht mit Silage zusetzen.

Vorteilhafterweise ist die steuerbare Kupplung eine Hydraulikkupplung. Der erforderliche Druck wird von der Schlepperhydraulik erzeugt. Bei zu niedrigem Druck stellt die Kupplung keine Verbindung her.

Mit dem erfindungsgemäßen Wagen ist gerade das Umladen oder Überladen von Silage auf einfache Weise und mit besonders hoher Förderleistung möglich.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
Fig. 1 eine teiltransparente Seitenansicht des Silagewagens,
Fig. 2 eine vereinfachte Seitenansicht analog Fig. 1,
Fig. 3 eine teiltransparente Draufsicht auf den Silagewagen,

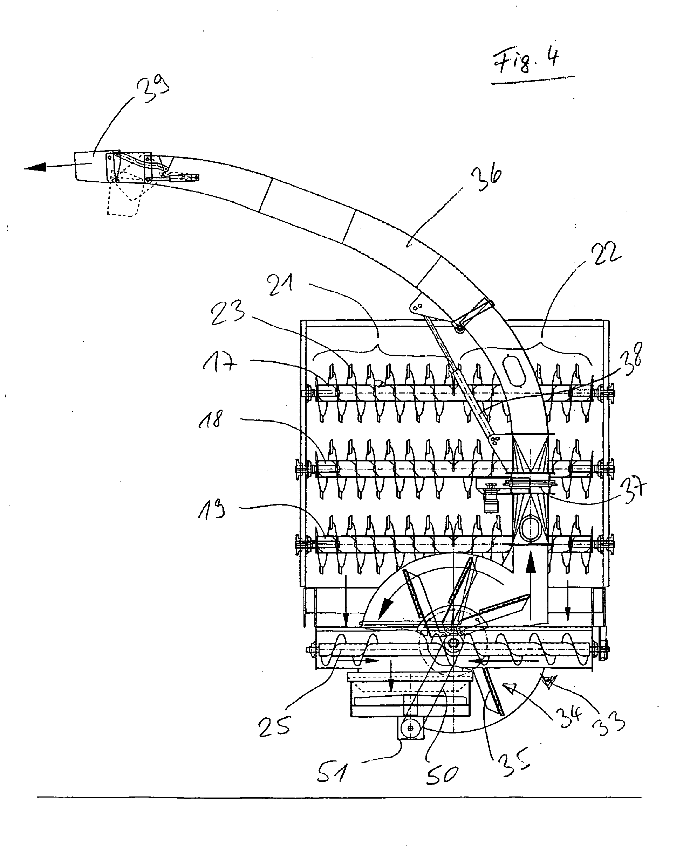

Fig. 4 eine teiltransparente Vorderansicht des Silagewagens.

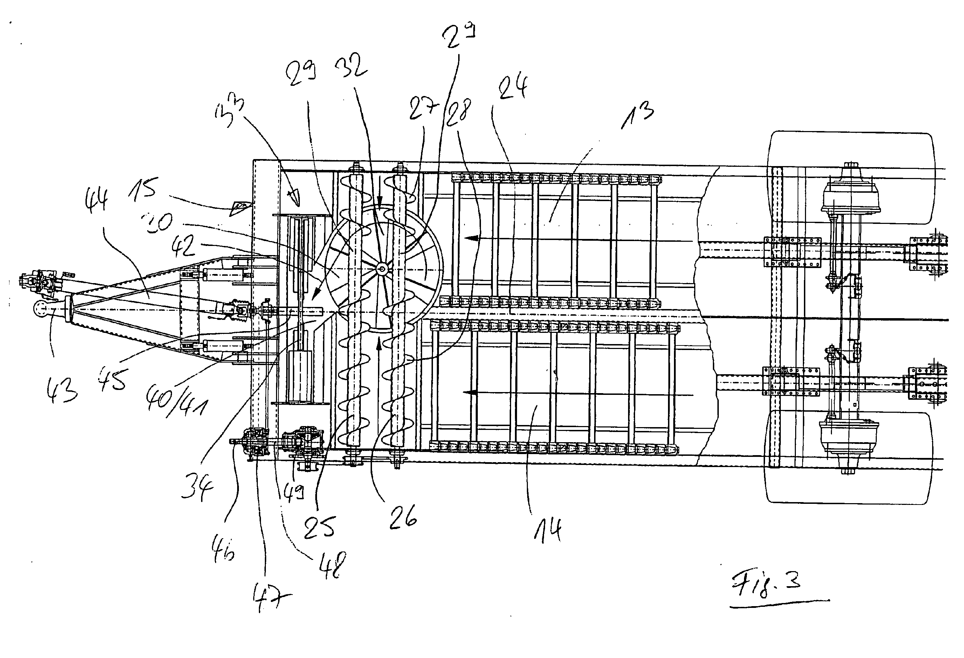

Ein Silagewagen 10 ist zum Umladen oder Überladen der Silage mit verschiedenen Zusatzaggregaten versehen. Ein Laderaum 11 ist oben offen und weist einen Laderaumförderer 12 auf, der vorzugsweise als Kratzbodenförderer ausgebildet ist. Gemäß Fig. 3 sind zwei parallel nebeneinander angeordnete Kratzbodenförderer 13, 14 mit umlaufenden Ketten vorgesehen, die die Silage in Richtung auf eine Wagenvorderseite 15 fördern. Als Laderaumförderer können auch andere Arten von Förderern vorgesehen sein, beispielsweise Schubbodenförderer mit hin- und hergehenden Schubleisten.

An den Laderaum 11 schließt in Förderrichtung des Laderaumförderers 12 ein Raum 16 an, in dem übereinander drei Zerkleinerungswalzen 17, 18, 19 quer zur Förderrichtung des Laderaumförderers 12 angeordnet sind. Der Übergang vom Laderaum 11 zum Raum 16 ist fließend. Es besteht keine Abtrennung. Die Zerkleinerungswalzen 17, 18, 19 sind in einer gemeinsamen Ebene angeordnet, die aufrecht und leicht zum Wagenheck 20 geneigt ist. Im Bereich der Zerkleinerungswalzen wird die zugeförderte Silage aufgelockert, auseinandergerissen und dabei auch zerkleinert. Ziel ist hier die Ausbildung einer gleichmäßig weiterförderbaren Silagemasse.

Die Zerkleinerungswalzen 17, 18, 19 weisen jeweils Schneckenwendel mit zwei gegenläufigen Schneckenwendelabschnitten 21, 22 auf. Außerdem sind die Schneckenwendel mit Reißzinken oder Reißzähnen 23 versehen. Durch die Bewegung der Zerkleinerungswalzen 17 bis 19 wird die Silage aufgelockert und kann zugleich (je nach Drehrichtung) in Richtung auf eine Wagenlängsmittelachse 24 gefördert werden.

Die unterste Zerkleinerungswalze 19 liegt insbesondere noch über dem Niveau des Laderaumförderers 12, der eine Laderaumbodenebene definiert. Im unteren Bereich des Raums 16 und unterhalb der Ebene des Laderaumförderers 12 sind in etwa parallel zu den Zerkleinerungswalzen ausgerichtete Querförderschnecken 25, 26 in einer im Wesentlichen horizontalen Ebene angeordnet. Jede der Querförderschnecken 25, 26 weist einen kürzeren Schneckenwendelabschnitt 27, einen längeren und entgegengesetzt gewendelten Schneckenwendelabschnitt 28 und dazwischen einen wendelfreien Abschnitt 29 auf. Letzterer ist bezogen auf die Länge der Querförderschnecken 25, 26 jeweils außermittig bzw. außerhalb der Längsmittelachse 24 angeordnet. Durch Drehung der Querförderschnecken 25, 26 wird die von den Zerkleinerungswalzen 17 bis 19 herabfallende Silage in den Bereich der freien Abschnitte 29 gefördert und gelangt von dort in ein unterhalb der Querförderschnecken angeordnetes Vorbeschleunigungsgebläse 30.

Das Vorbeschleunigungsgebläse 30 weist einen um eine senkrechte Drehachse drehenden Rotor 31 mit leicht abgewinkelten Rotorblättern 32 auf. Diese erfassen die von oben drückende Silagemasse, beschleunigen und schleudern sie in Richtung eines nachgeordneten Auswurfrotorgebläses 33.

Das Auswurfrotorgebläse 33 weist eine horizontale und im Wesentlichen parallel zur Längsmittelachse 24 verlaufende Drehachse auf. Ein Rotor 34 ist mit Rotorschaufeln 35 versehen, die relativ zur Rotationsebene des Rotors 34 um 90° abgewinkelt und relativ zur jeweiligen Radialrichtung um etwa 10° bis 20° geneigt sind. Dadurch verbessert sich die Schleuderwirkung des Rotors 34.

Senkrecht, tangential und in Fahrtrichtung links schließt an das Auswurfrotorgebläse 33 ein Auswurfturm 36 an, welcher über einen Drehkranz 37 drehbar und durch einen Aushebezylinder 38 in der Neigung verstellbar ist. Außerdem kann die Richtung der ausgeworfenen Silage noch durch eine Auswurfklappe 39 beeinflusst werden.

Zwischen dem Vorbeschleunigungsgebläse 30 und dem Auswurfrotorgebläse 33 ist ein freier Querschnitt 40 vorgesehen, der etwa ein Zehntel bis ein Viertel der vom Rotor 34 des Auswurfrotorgebläses 33 überstrichenen Fläche beträgt. Außerdem liegt der freie Querschnitt in Wagenlängsrichtung hinter einem unteren Bereich des Auswurfrotorgebläses 33. Letzteres ist somit das vorderste Förderaggregat am Silagewagen 10.

Der freie Querschnitt 40 ist zugleich Teil eines Übergabekanals 41 zwischen dem Vorbeschleunigungsgebläse 30 und dem Auswurfrotorgebläse 33. Durch die Relativanordnung von Vorbeschleunigungsgebläse 30 und Auswurfrotorgebläse 33 sowie die Anordnung von Wandungen des Übergabekanals 41 verläuft dieser unter einem Winkel von etwa 25° bis 45° - siehe Pfeil 42 - zur Rotationsebene des Rotors 34.

An seiner Vorderseite 15 weist der Silagewagen 10 eine Deichsel 43 für die Verbindung mit einer Anhängerkupplung eines Schleppers sowie eine Gelenkwelle 44 zum Anschluss an eine Zapfwelle des Schleppers auf. Die Gelenkwelle 44 ist unmittelbar mit einer Rotorwelle 45 des Auswurfrotorgebläses 33 verbunden und treibt diese direkt an.

Weiterhin ist an der Vorderseite 15 ein Hydraulikanschluss 46 vorgesehen, nämlich im Bereich einer Hydraulikkupplung 47. Letztere ist über einen Kettentrieb mit der Rotorwelle 45 verbunden und weist eine parallel zur Längsmittelachse 24 verlaufende Abtriebswelle 48 auf, die ein Winkelgetriebe 49 antreibt.

An das Winkelgetriebe 49 sind über entsprechende Kettentriebe die Querförderschnecken 25, 26 und die Zerkleinerungswalzen 17, 18, 19 angeschlossen. Mittelbar werden somit auch diese Förderaggregate von der Zapfwelle des Schleppers angetrieben.

Ein weiterer Kettentrieb 50 ist vorgesehen zwischen der Rotorwelle 45 und einem Winkelgetriebe 51. Letzteres liegt unterhalb des Vorbeschleunigungsgebläses 30 und treibt dieses unmittelbar an.

Zur Vermeidung von Schäden durch Betriebsstörungen sind verschiedene Sicherungen und Sensoren vorgesehen. Von besonderer Bedeutung ist die Funktion der Hydraulikkupplung 47. Diese ist so eingestellt, dass erst dann ein Kraftschluss hergestellt wird, wenn Auswurfrotorgebläse 33 und Vorbeschleunigungsgebläse 30 bestimmte Mindestdrehzahlen erreicht haben. Somit laufen erst danach die Zerkleinerungswalzen 17 bis 19 und die Querförderschnecken 25, 26 an. Auch wird dann erst der Laderaumförderer 12 angetrieben.

Der Antrieb für den Laderaumförderer 12 erfolgt vorzugsweise hydraulisch, so dass insgesamt eine Aufteilung der Antriebsarten vorliegt. Der größte Teil der Antriebsleistung wird von der Zapfwelle des Schleppers aufgebracht, während ein kleinerer Teil für den Hydraulikantrieb des Laderaumförderers 12 benötigt wird.

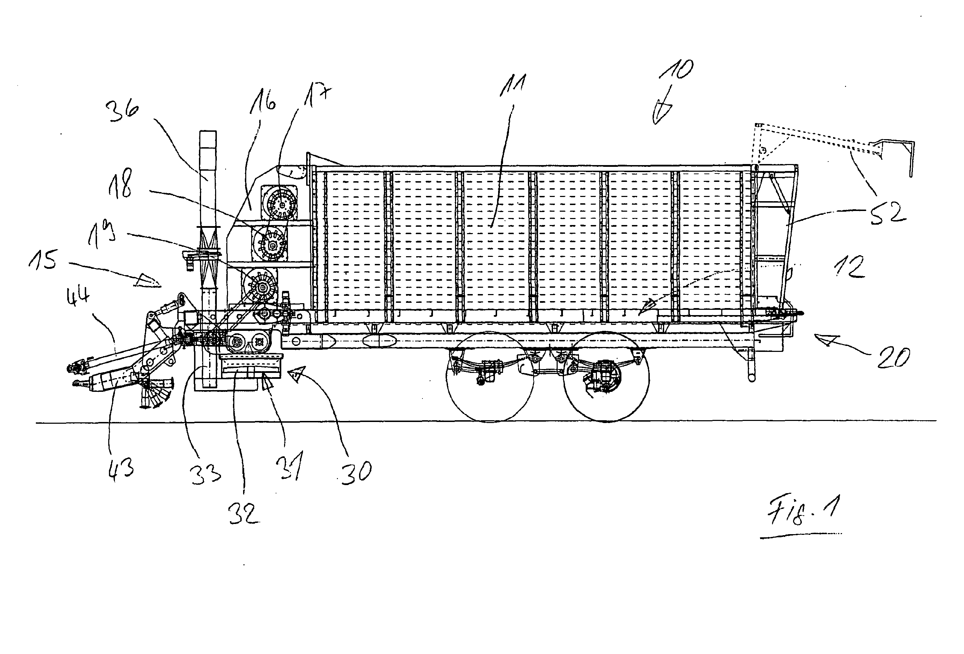

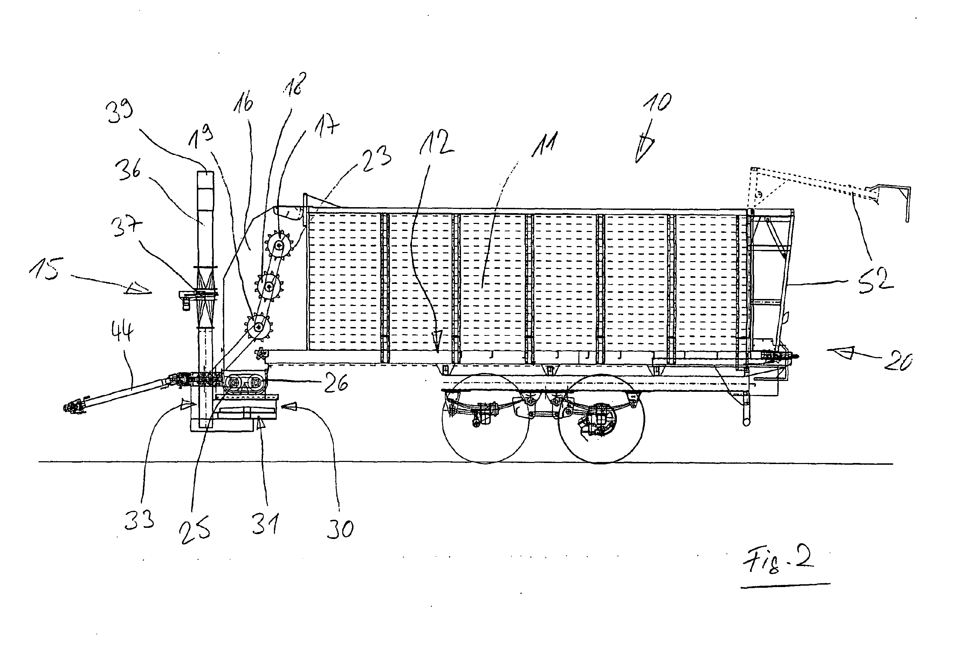

Am Wagenheck 20 weist der Silagewagen 10 eine nach oben aufschwenkbare Heckklappe 52 auf, siehe Fig. 1 und 2. Durch Umkehrung der Förderrichtung des Laderaumförderers 12 kann die Silage auch über das Wagenheck 20 entladen werden.

Der Silagewagen 10 weist in der gezeigten Ausführung eine Tandemachse mit großvolumiger Bereifung für das Befahren von Ackerflächen auf und kann bis über 40 m³ Silage aufnehmen. Durch den Frontaustrag der Silage ist eine gute Übersichtlichkeit und einfache Handhabung vom Schlepper aus gewährleistet.

Das Umladen der Silage durch den erfindungsgemäßen Silagewagen ermöglicht zugleich eine Verdichtung der Silage am Zielort bzw. im Zielladeraum von 10 bis 15 %. Durch die Ausrichtung des Auswurfturms 36 kann die Silage nahezu punktgenau und mit großer Wurfweite auch in weiter entfernt stehende LKWs oder Behälter gefördert werden. Gleichwohl weist der Silagewagen 10 eine große Standsicherheit in Verbindung mit einer wartungsarmen Antriebstechnik auf. In Verbindung mit einem Heckaustrag kann der Silagewagen auch als Häckseltransportwagen verwendet werden.

In Abänderung der gezeigten Ausführungsform kann das Vorbeschleunigungsgebläse auch getrennt vom Auswurfrotorgebläse angetrieben sein, etwa durch einen Hydraulikantrieb, oder zusammen mit den Querschnecken und den Zerkleinerungswalzen über einen Kettenantrieb. Alternativ wird das Vorbeschleunigungsgebläse zusammen mit den Querförderschnecken angetrieben. Die Zerkleinerungswalzen werden dann einzeln oder zusammen mit dem Auswurfrotorgebläse angetrieben.

Möglich ist auch eine Ausführung ohne Vorbeschleunigungsrotor. Dann wird die Silage direkt von einer oder mehreren Querförderschnecken direkt in das Auswurfrotorgebläse dosiert.

Schließlich kann zwischen dem Laderaumförderer 12 und den Zerkleinerungswalzen ein Stauschieber vorgesehen sein.

### Bezugszeichenliste:

- 10: Silagewagen
- 11: Laderaum
- 12: Laderaumförderer
- 13: Kratzbodenförderer
- 14: Kratzbodenförderer
- 15: Wagenvorderseite
- 16: Raum
- 17: Zerkleinerungswalze
- 18: Zerkleinerungswalze
- 19: Zerkleinerungswalze
- 20: Wagenheck
- 21: Schneckenwendelabschnitt
- 22: Schneckenwendelabschnitt
- 23: Reißzähne
- 24: Wagenlängsmittelachse
- 25: Querförderschnecke
- 26: Querförderschnecke
- 27: kurzer Schneckenwendelabschnitt
- 28: langer Schneckenwendelabschnitt
- 29: wendelfreier Abschnitt
- 30: Vorbeschleunigungsgebläse
- 31: Rotor
- 32: Rotorblätter
- 33: Auswurfrotorgebläse
- 34: Rotor
- 35: Rotorschaufeln
- 36: Auswurfturm
- 37: Drehkranz
- 38: Aushebezylinder
- 39: Auswurfklappe
- 40: freier Querschnitt
- 41: Übergabekanal
- 42: Pfeil
- 43: Deichsel
- 44: Gelenkwelle
- 45: Rotorwelle
- 46: Hydraulikanschluss
- 47: Hydraulikkupplung
- 48: Abtriebswelle
- 49: Winkelgetriebe
- 50: Kettentrieb
- 51: Winkelgetriebe
- 52: Heckklappe

## Patentansprüche

1. Silagewagen (10) mit einem Laderaum (11) zur Aufnahme von Silage, einem Auswurfrotorgebläse (33) mit Auswurfturm (36) und mit einem Laderaumförderer (12) zur Förderung der Silage innerhalb des Laderaums in Richtung auf das Auswurfrotorgebläse (33), **dadurch gekennzeichnet, dass** dem Auswurfrotorgebläse (33) ein Vorbeschleunigungsgebläse (30) vorgeordnet ist.

2. Silagewagen nach Anspruch 1, **dadurch gekennzeichnet, dass** zwischen Vorbeschleunigungsgebläse (30) und Auswurfrotorgebläse (33) ein freier Querschnitt für die Übergabe der Silage vom Vorbeschleunigungsgebläse zum Auswurfrotorgebläse vorgesehen ist, welcher kleiner ist als ein Viertel der vom Rotor (34) des Auswurfrotorgebläses überstrichenen Fläche.

3. Silagewagen nach Anspruch 2, **dadurch gekennzeichnet, dass** der freie Querschnitt für die Übergabe der Silage 1/10 bis 1/4 der vom Rotor des Auswurfrotorgebläses überstrichenen Fläche beträgt.

4. Silagewagen nach Anspruch 1 oder einem der weiteren Ansprüche, **dadurch gekennzeichnet, dass** das Vorbeschleunigungsgebläse (30) einen Eingangsquerschnitt für den Eintritt der Silage aufweist, welcher etwa der vom Rotor (31) des Vorbeschleunigungsgebläses überstrichenen Fläche entspricht.

5. Silagewagen nach Anspruch 1 oder einem der weiteren Ansprüche, **dadurch gekennzeichnet, dass** das Vorbeschleunigungsgebläse (30) mit aufrechter Drehachse rotiert und in einer Ebene unterhalb einer horizontalen und in einer Drehachse des Auswurfrotorgebläses (31) liegenden Ebene angeordnet ist.

6. Silagewagen nach Anspruch 1 oder einem der weiteren Ansprüche, **dadurch gekennzeichnet, dass** das zu fördernde Gut vom Vorbeschleunigungsgebläse (30) in das Auswurfrotorgebläse (33) unter einem Winkel von 20° bis 50°, insbesondere 25° bis 45° eintritt, wobei der Winkel an einer Rotationsebene des Auswurfrotorgebläses anliegt, und wobei das zu fördernde Gut beim Eintritt in das Auswurfrotorgebläse eine Geschwindigkeitskomponente in Drehrichtung des Auswurfrotorgebläses aufweist.

7. Silagewagen nach Anspruch 1 oder einem der weiteren Ansprüche, **dadurch gekennzeichnet, dass** das Vorbeschleunigungsgebläse (30) Rotorblätter (32) aufweist, die zur Rotationsebene um etwa 30° bis 60° geneigt sind.

8. Silagewagen nach Anspruch 1 oder einem der weiteren Ansprüche, **dadurch gekennzeichnet, dass** das Auswurfrotorgebläse (33) Rotorschaufeln (35) aufweist, die zur Rotationsebene des Auswurfrotorgebläses etwa 90° geneigt sind, und die relativ zur jeweiligen Radialrichtung gegen die Drehrichtung geneigt sind um 10° bis 20°.

9. Silagewagen nach Anspruch 1 oder einem der weiteren Ansprüche, **gekennzeichnet durch** Zerkleinerungswalzen (17, 18, 19) im Anschluss an den Laderaumförderer (12) oder am Ende desselben.

10. Silagewagen nach Anspruch 1 oder einem der weiteren Ansprüche, **dadurch gekennzeichnet, dass** zwischen Auswurfrotorgebläse (33) und Laderaumförderer (12) eine Querfördereinrichtung vorgesehen ist, insbesondere unterhalb einer Laderaumbodenebene.

11. Silagewagen nach Anspruch 10, **dadurch gekennzeichnet, dass** die Querfördereinrichtung die Silage von außen nach innen fördert.

12. Silagewagen nach Anspruch 10 oder 11, **dadurch gekennzeichnet, dass** die Querfördereinrichtung mindestens eine Schnecke aufweist, wobei auf einem freien Abschnitt einer Schneckenwelle keine Schneckenwendel vorgesehen ist und wobei auf hierzu benachbarten Abschnitten (27, 28) der Schneckenwelle Schneckenwendel angeordnet sind, mit denen die Silage in Richtung auf den freien Abschnitt (29) förderbar ist.

13. Silagewagen nach Anspruch 1 oder einem der weiteren Ansprüche, **dadurch gekennzeichnet, dass** das Vorbeschleunigungsgebläse (30) unterhalb einer Laderaumbodenebene angeordnet ist, insbesondere unterhalb einer dem Laderaumförderer (12) nachgeordneten Querfördereinrichtung.

14. Silagewagen nach Anspruch 1 oder einem der weiteren Ansprüche, **dadurch gekennzeichnet, dass** der Laderaumförderer (12) nach Art eines Kratzbodenförderers ausgebildet ist.

15. Silagewagen nach Anspruch 1 oder einem der weiteren Ansprüche, **dadurch gekennzeichnet, dass** der Laderaumförderer (12) mehrere, parallel nebeneinander angeordnete Förderer beinhaltet.

16. Silagewagen nach Anspruch 1 oder einem der weiteren Ansprüche, **dadurch gekennzeichnet, dass** das Auswurfrotorgebläse (33) an einer Vorderseite (15) des Silagewagens (10) angeordnet ist, und dass der Laderaumförderer (12) die Silage in Richtung auf die Vorderseite fördert.

17. Silagewagen nach Anspruch 9 oder einem der weiteren Ansprüche, **dadurch gekennzeichnet, dass** die Zerkleinerungswalzen (17, 18, 19) Schneckenwendel aufweisen, und dass die Schneckenwendel für eine Förderung der Silage von außen nach innen ausgebildet sind.

18. Silagewagen nach Anspruch 1 oder einem der weiteren Ansprüche, **dadurch gekennzeichnet, dass** das Auswurfrotorgebläse (33) direkt von einer Zapfwelle eines Schleppers antreibbar ist.

19. Silagewagen nach Anspruch 1 oder einem der weiteren Ansprüche, **dadurch gekennzeichnet, dass** der Laderaumförderer (12) hydraulisch angetrieben ist.

20. Silagewagen nach Anspruch 1 oder einem der weiteren Ansprüche, **dadurch gekennzeichnet, dass** das Vorbeschleunigungsgebläse getrieblich mit dem Antrieb für das Auswurfrotorgebläse gekoppelt ist.

21. Silagewagen nach Anspruch 1 oder einem der weiteren Ansprüche, **dadurch gekennzeichnet, dass** Zerkleinerungswalzen und/oder Querfördereinrichtungen mittelbar über eine Zapfwelle eines Schleppers antreibbar sind, insbesondere getrieblich mit der Welle (45) des Auswurfrotorgebläses (33) verbunden sind.

22. Silagewagen nach Anspruch 21, **dadurch gekennzeichnet, dass** in einer getrieblichen Verbindung zwischen Rotorwelle (45) einerseits und Zerkleinerungswalze und/oder Querfördereinrichtung andererseits eine steuerbare Kupplung vorgesehen ist.

23. Silagewagen nach Anspruch 22, **dadurch gekennzeichnet, dass** die steuerbare Kupplung eine Hydraulikkupplung (47) ist.

24. Verwendung eines Wagens mit Laderaum (11), Auswurfrotorgebläse (33) und dem Auswurfrotorgebläse (33) vorgeordneten Vorbeschleunigungsgebläse (30) für den Transport und/oder das Umladen von Silage.

## Claims

1. Silage car (10) having a loading space (11) for the reception of silage, a discharge rotor fan (33) with discharge tower (36), and having a loading space conveyor (12) for conveying the silage within the loading space in the direction of the discharge rotor fan (33), **characterized in that** a pre-acceleration fan (30) is arranged upstream of the discharge rotor fan (33).

2. Silage car according to Claim 1, **characterized in that** between the pre-acceleration fan (30) and the discharge rotor fan (33) is provided a free cross-section for the transfer of the silage from the pre-acceleration fan to the discharge rotor fan, which free cross-section is less than one-quarter of the area swept by the rotor (34) of the discharge rotor fan.

3. Silage car according to Claim 2, **characterized in that** the free cross-section for the transfer of the silage measures 1/10 to 1/4 of the area swept by the rotor of the discharge rotor fan.

4. Silage car according to Claim 1 or one of the other claims, **characterized in that** the pre-acceleration fan (30) has an intake cross-section for the entry of the silage, which intake cross-section roughly corresponds to the area swept by the rotor (31) of the pre-acceleration fan.

5. Silage car according to Claim 1 or one of the other claims, **characterized in that** the pre-acceleration fan (30) rotates with upright rotational axis and is disposed in a plane beneath a horizontal plane lying in a rotational axis of the discharge rotor fan (31).

6. Silage car according to Claim 1 or one of the other claims, **characterized in that** the material to be conveyed passes from the pre-acceleration fan (30) into the discharge rotor fan (33) at an angle of 20° to 50°, in particular 25° to 45°, wherein the angle lies adjacent to a rotational plane of the discharge rotor fan and wherein the material to be conveyed, as it passes into the discharge rotor fan, has a velocity component in the rotational direction of the discharge rotor fan.

7. Silage car according to Claim 1 or one of the other claims, **characterized in that** the pre-acceleration fan (30) has rotor blades (32), which are inclined by about 30° to 60° to the rotational plane.

8. Silage car according to Claim 1 or one of the other claims, **characterized in that** the discharge rotor fan (33) has rotor vanes (35), which are inclined by about 90° to the rotational plane of the discharge rotor plane and which are inclined by 10° to 20° relative to the respective radial direction counter to the direction of rotation.

9. Silage car according to Claim 1 or one of the other claims, **characterized by** crushing rollers (17, 18, 19) following on from the loading space conveyor (12) or at the end of the same.

10. Silage car according to Claim 1 or one of the other claims, **characterized in that** a transverse conveyor is provided between the discharge rotor fan (33) and the loading space conveyor (12), in particular beneath a loading space floor plane.

11. Silage car according to Claim 10, **characterized in that** the transverse conveyor conveys the silage from outside to inside.

12. Silage car according to Claim 10 or 11, **characterized in that** the transverse conveyor has at least one worm, wherein on a free portion of a worm shaft no worm spiral is provided, and wherein on hereto adjacent portions (27, 28) of the worm shaft are arranged worm spirals with which the silage can be conveyed in the direction of the free portion (29).

13. Silage car according to Claim 1 or one of the other claims, **characterized in that** the pre-acceleration fan (30) is disposed beneath a loading space floor plane, in particular beneath a transverse conveyor arranged downstream of the loading space conveyor (12).

14. Silage car according to Claim 1 or one of the other claims, **characterized in that** the loading space conveyor (12) is configured in the style of a scraper floor conveyor.

15. Silage car according to Claim 1 or one of the other claims, **characterized in that** the loading space conveyor (12) contains a plurality of conveyors arranged side by side in parallel.

16. Silage car according to Claim 1 or one of the other claims, **characterized in that** the discharge rotor fan (33) is disposed on a front side (15) of the silage car (10), and **in that** the loading space conveyor (12) conveys the silage in the direction of the front side.

17. Silage car according to Claim 9 or one of the other claims, **characterized in that** the crushing rollers (17, 18, 19) have worm spirals, and **in that** the worm spirals are configured to convey the silage from the outside inwards.

18. Silage car according to Claim 1 or one of the other claims, **characterized in that** the discharge rotor fan (33) can be driven directly by a power take-off shaft of a tractor.

19. Silage car according to Claim 1 or one of the other claims, **characterized in that** the loading space conveyor (12) is hydraulically driven.

20. Silage car according to Claim 1 or one of the other claims, **characterized in that** the pre-acceleration fan is coupled to the drive for the discharge rotor fan by gear coupling.

21. Silage car according to Claim 1 or one of the other claims, **characterized in that** the crushing rollers and/or transverse conveyors can be driven indirectly via a power take-off shaft of a tractor, in particular are connected to the shaft (45) of the discharge rotor fan (33) by gear coupling.

22. Silage car according to Claim 21, **characterized in that**, in a geared connection between the rotor shaft (45) on the one hand and a crushing roller and/or transverse conveyor on the other hand, a controllable clutch is provided.

23. Silage car according to Claim 22, **characterized in that** the controllable clutch is a hydraulic clutch (47).

24. Use of a silage car having a loading space (11), a discharge rotor fan (33) and a pre-acceleration fan (30), arranged upstream of the discharge rotor fan (33), for the transport and/or transfer of silage.

## Revendications

1. Wagon d'ensilage (10) comprenant un espace de chargement (11) pour recevoir l'ensilage, une soufflante à rotor de projection (33) avec une tourelle de projection (36) et un transporteur d'espace de chargement (12) pour le transport de l'ensilage à l'intérieur de l'espace de chargement dans la direction de la soufflante à rotor de projection (33), **caractérisé en ce que** la soufflante à rotor de projection (33) est précédée d'une soufflante de préaccélération (30).

2. Wagon d'ensilage selon la revendication 1, **caractérisé en ce qu'**une section transversale libre pour le transfert de l'ensilage de la soufflage de préaccélération à la soufflante à rotor de projection est prévue entre la soufflante de préaccélération (30) et la soufflante à rotor de projection (33), laquelle est inférieure à un quart de la surface balayée par le rotor (34) de la soufflante à rotor de projection.

3. Wagon d'ensilage selon la revendication 2, **caractérisé en ce que** la section transversale libre pour le transfert de l'ensilage vaut 1/10 à 1/4 de la surface balayée par le rotor de la soufflante à rotor de projection.

4. Wagon d'ensilage selon la revendication 1 ou selon l'une quelconque des autres revendications, **caractérisé en ce que** la soufflante de préaccélération (30) présente une section transversale d'entrée pour l'entrée de l'ensilage qui correspond approximativement à la surface balayée par le rotor (31) de la soufflante de préaccélération.

5. Wagon d'ensilage selon la revendication 1 ou selon l'une quelconque des autres revendications, **caractérisé en ce que** la soufflante de préaccélération (30) tourne avec un axe de rotation vertical, et est disposée dans un plan en dessous d'un plan horizontal et situé dans un axe de rotation de la soufflante à rotor de projection (33).

6. Wagon d'ensilage selon la revendication 1 ou selon l'une quelconque des autres revendications, **caractérisé en ce que** le produit à transporter depuis la soufflante de préaccélération (30) dans la soufflante à rotor de projection (33) entre suivant un angle de 20° à 50°, notamment de 25° à 45°, l'angle s'appliquant contre un plan de rotation de la soufflante à rotor de projection, et le produit à transporter, lors de son entrée dans la soufflante à rotor de projection, présentant une composante de vitesse dans la direction de rotation de la soufflante à rotor de projection.

7. Wagon d'ensilage selon la revendication 1 ou selon l'une quelconque des autres revendications, **caractérisé en ce que** la soufflante de préaccélération (30) présente des pales de rotor (32) qui sont inclinées d'environ 30° à 60° par rapport au plan de rotation.

8. Wagon d'ensilage selon la revendication 1 ou selon l'une quelconque des autres revendications, **caractérisé en ce que** la soufflante à rotor de projection (33) présente des aubes de rotor (35) qui sont inclinées d'environ 90° par rapport au plan de rotation de la soufflante à rotor de projection, et qui sont inclinées de 10° à 20° par rapport à la direction radiale respective vers la direction de rotation.

9. Wagon d'ensilage selon la revendication 1 ou selon l'une quelconque des autres revendications, **caractérisé par** des cylindres de broyage (17, 18, 19) raccordés à la suite du transporteur d'espace de chargement (12) ou à l'extrémité de celui-ci.

10. Wagon d'ensilage selon la revendication 1 ou selon l'une quelconque des autres revendications, **caractérisé en ce qu'**un dispositif de transport transversal est prévu entre la soufflante à rotor de projection (33) et le transporteur d'espace de chargement (12), notamment en dessous d'un plan du sol de l'espace de chargement.

11. Wagon d'ensilage selon la revendication 10, **caractérisé en ce que** le dispositif de transport transversal transporte l'ensilage de l'extérieur vers l'intérieur.

12. Wagon d'ensilage selon la revendication 10 ou 11, **caractérisé en ce que** le dispositif de transport transversal présente au moins une vis sans fin, aucune spire de vis sans fin n'étant prévue sur une portion libre d'un arbre de vis sans fin, et des spires de vis sans fin étant disposées sur des portions (27, 28) de l'arbre de vis sans fin adjacentes à celle-ci, avec lesquelles l'ensilage peut être transporté dans la direction de la portion libre (29).

13. Wagon d'ensilage selon la revendication 1 ou selon l'une quelconque des autres revendications, **caractérisé en ce que** la soufflante de préaccélération (30) est disposée en dessous d'un plan du sol de l'espace de chargement, notamment en dessous d'un dispositif de transport transversal disposé après le transporteur d'espace de chargement (12).

14. Wagon d'ensilage selon la revendication 1 ou selon l'une quelconque des autres revendications, **caractérisé en ce que** le transporteur d'espace de chargement (12) est réalisé à la manière d'un transporteur à fond racleur.

15. Wagon d'ensilage selon la revendication 1 ou selon l'une quelconque des autres revendications, **caractérisé en ce que** le transporteur d'espace de chargement (12) contient plusieurs transporteurs disposés parallèlement les uns à côté des autres.

16. Wagon d'ensilage selon la revendication 1 ou selon l'une quelconque des autres revendications, **caractérisé en ce que** la soufflante à rotor de projection (33) est disposée sur un côté avant (15) du wagon d'ensilage (10), et **en ce que** le transporteur d'espace de chargement (12) transporte l'ensilage dans la direction du côté avant.

17. Wagon d'ensilage selon la revendication 9 ou selon l'une quelconque des autres revendications, **caractérisé en ce que** les cylindres de broyage (17, 18, 19) présentent des spires de vis sans fin et **en ce que** les spires de vis sans fin sont réalisées pour un transport de l'ensilage de l'extérieur vers l'intérieur.

18. Wagon d'ensilage selon la revendication 1 ou selon l'une quelconque des autres revendications, **caractérisé en ce que** la soufflante à rotor de projection (33) peut être entraînée directement par un arbre de prise de force d'un tracteur.

19. Wagon d'ensilage selon la revendication 1 ou selon l'une quelconque des autres revendications, **caractérisé en ce que** le transporteur d'espace de chargement (12) est entraîné hydrauliquement.

20. Wagon d'ensilage selon la revendication 1 ou selon l'une quelconque des autres revendications, **caractérisé en ce que** la soufflante de préaccélération est accouplée par une transmission à l'entraînement pour la soufflante à rotor de projection.

21. Wagon d'ensilage selon la revendication 1 ou selon l'une quelconque des autres revendications, **caractérisé en ce que** des cylindres de broyage et/ou des dispositifs de transport transversaux peuvent être entraînés de manière indirecte par le biais d'un arbre de prise de force d'un tracteur, notamment sont accouplés par une transmission à l'arbre (45) de la soufflante à rotor de projection (33).

22. Wagon d'ensilage selon la revendication 21, **caractérisé en ce que** dans une connexion par transmission entre l'arbre de rotor (45) d'une part et le cylindre de broyage et/ou le dispositif de transport transversal d'autre part, est prévu un embrayage commandable.

23. Wagon d'ensilage selon la revendication 22, **caractérisé en ce que** l'embrayage commandable est un embrayage hydraulique (47).

24. Utilisation d'un wagon avec un espace de chargement (11), une soufflante à rotor de projection (33) et une soufflante de préaccélération (30) disposée avant la soufflante à rotor de projection (33), pour le transport et/ou le déchargement d'ensilage.
